# EUROPÄISCHE PATENTSCHRIFT

(11) **EP 2 121 312 B1**
(45) Veröffentlichungstag und Bekanntmachung des Hinweises auf die Patenterteilung: **19.05.2010**
(21) Anmeldenummer: 08701383.5
(22) Anmeldetag: 10.01.2008
(51) Int. Cl.: B32B 27/12, B32B 27/40, A41D 31/02, A43B 7/12, A43B 23/02, A43B 23/06, A61L 15/12

(54) **LAMINAT ENTHALTEND FOLIE UND VLIES AUF DER BASIS VON THERMOPLASTISCHEM POLYURETHAN**
LAMINATE CONTAINING FILM AND NONWOVEN MATERIAL BASED ON THERMOPLASTIC POLYURETHANE
STRATIFIÉ CONTENANT UNE FEUILLE ET UN NON-TISSÉ À BASE DE POLYURÉTHANE THERMOPLASTIQUE

(30) Priorität: 17.01.2007 EP 07100698
(43) Veröffentlichungstag der Anmeldung: 25.11.2009
(73) Patentinhaber: BASF SE, 67056 Ludwigshafen (DE)
(72) Erfinder: MALZ, Hauke, 49356 Diepholz (DE); UHLHORN, Frank, 49457 Drebber (DE)
(86) Internationale Anmeldenummer: PCT/EP2008/050232
(87) Internationale Veröffentlichungsnummer: WO 2008/087087

(56) Entgegenhaltungen:
- EP-A- 0 658 581
- WO-A-2006/128873
- US-A- 4 660 228
- US-A- 5 669 797
- US-A- 6 124 001

## Beschreibung

Die Erfindung betrifft Laminate enthaltend haftend miteinander verbunden
(i) Folie auf der Basis von thermoplastischem Polyurethan basierend auf Polyetherdiol hergestellt durch Alkoxylierung von difunktionellen Startsubstanzen, wobei als Alkylenoxid Ethylenoxid eingesetzt wird und der Gewichtsanteil an Ethylenoxid bezogen auf das Gesamtgewicht der eingesetzten Alkylenoxide mindestens 20 Gew.-% beträgt sowie
(ii) Vlies auf der Basis von thermoplastischem Polyurethan.

Des weiteren bezieht sich die Erfindung auf Verfahren zur Herstellung der erfindungsgemäßen Laminate sowie Bekleidungsstücke, insbesondere Oberbekleidung, Schuhe und medizinische Artikel, bevorzugt Bandagen und Wundauflagen, enthaltend die erfindungsgemäßen Laminate.

Die Ausrüstung von Bekleidungsstücken und Schuhen mit atmungsaktiven, dass heißt wasserdampfdurchlässigen aber wind- und wasserdichten Membranen, die nicht nur den Träger gegen äußere Witterungsbedingungen schützen, sondern auch einen angenehmen Tragekomfort garantieren, ist allgemein bekannt. Goretex^{®}-Membranen wurden ein Synonym für derartige Produkte. Der Nachteil der Goretex^{®}-Membrane war aber ihr Aufbau aus einer teuren schwer zu handhabenden Teflonmembran und einer Polyurethanschicht. Dies machte die Verarbeitung kompliziert und ein stoffliches Recycling unmöglich. Billigere Entwicklungen nutzen wasserdampfdurchlässige Folien aus thermoplastischem Polyurethan (TPU). Diese Folien besitzen aber eine mitunter schlechte Verarbeitbarkeit. So konnte man sie z. B. aufgrund ihrer im Vergleich zu einem Textil niedrigen Weiterreißfestigkeit nicht einnähen, sondern musste mittels eines teuren Laminierschritts verarbeitet werden. Durch die Laminierung auf einem artfremden Werkstoff wurde wiederum jegliche Recyclingmöglichkeit genommen. Zudem besaßen die Folien keinen textilen Charakter, z. B. eine textile Haptik, was den Tragekomfort reduzierte.

Die Aufgabe der vorliegenden Erfindung bestand somit darin, eine Membran insbesondere zur Anwendung in Schuhen oder Bekleidungsstücken zu entwickeln, die möglichst winddicht und wasserdicht sowie atmungsaktiv, d. h. wasserdampfdurchlässig ist, textilen Charakter besitzt, leicht zu verarbeiten und möglichst aus einem Werkstoff hergestellt ist.

Diese Aufgabe konnte durch die eingangs dargestellten Laminate, insbesondere die erfindungsgemäßen Bekleidungstücke, Schuhe und medizinischen Artikel enthaltend die Laminate gelöst werden.

Die erfindungsgemäßen Laminate zeichnen sich dadurch aus, dass ein haptisch angenehmes, textiles aber offenporiges Vlies mit guter Wärmeformbeständigkeit gepaart wird mit einer atmungsaktiven und wasserundurchlässigen Folie. Ein solches Laminat hat sehr gute Reißfestigkeit bei hoher Elastizität und somit alle Voraussetzungen als Alternative für ein Bekleidungsobermaterial, Schuhe und medizinische Artikel wie Bandagen und Wundauflagen. Zudem bestehen die Membranen aus einem Werkstoff, TPU, und sind somit voll werkstofflich der Wiederverwertung zugänglich.

Beide Komponenten des erfindungsgemäßen Laminates enthalten bevorzugt bestehen aus thermoplastischem Polyurethan. Thermoplastisches Polyurethan ist als Werkstoff allgemein bekannt und vielfältig beschrieben. Thermoplastische Polyurethane sind Polyurethane, die, wenn sie in dem für den Werkstoff für Verarbeitung und Anwendung typischen Temperaturbereich wiederholt erwärmt und abgekühlt werden, thermoplastisch bleiben. Unter thermoplastisch wird hierbei die Eigenschaft des Polyurethans verstanden, in einem für das Polyurethan typischen Temperaturbereich zwischen 150 °C und 300 °C wiederholt in der Wärme zu erweichen und beim Abkühlen zu erhärten und im erweichten Zustand wiederholt durch Fließen als Formteil, Extrudat oder Umformteil zu Halbzeug oder Gegenständen formbar zu sein.

Das für die Folie (i) und das Vlies (ii) verwendete thermoplastische Polyurethan ist bevorzugt erhältlich durch Umsetzung von (a) Isocyanaten mit (b) gegenüber Isocyanaten reaktiven Verbindungen, bevorzugt mit einem zahlenmittleren Molekulargewicht von 500 bis 10000 g/mol und gegebenenfalls (c) Kettenverlängerungsmitteln mit einem Molekulargewicht von 50 bis 499 g/mol, gegebenenfalls in Gegenwart von (d) Katalysatoren und/oder (e) Hilfsstoffen. Die entsprechenden Ausgangsstoffe sind allgemein bekannt und kommerziell erhältlich. Das thermoplastische Polyurethan als solches weist üblicherweise eine Dichte von 800 bis 1500 Gramm pro Liter (g/I), bevorzugt von 1000 bis 1300 g/l auf.

Die Herstellung der TPU kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, z. B. bei Temperaturen von 100 bis 280 °C, vorzugsweise 140 bis 250 °C zur Reaktion gebracht, das erhaltene TPU wird extrudiert, abgekühlt und granuliert.

Die bei der Herstellung der Polyurethane üblicherweise verwendeten Komponenten (a), (b) sowie gegebenenfalls (c), (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Hexamethylendiisocyanat (HDI), 2,2'-, 2,4'- und/oder 4,4'-Diphenylmethandiisocyanat (MDI), hydriertes MDI (HMDI), Ethylendiphenylendiisocyanat (EDI). Bevorzugt verwendet wird HDI und/oder 4,4'-MDI, besonders bevorzugt 4,4'-Diphenylmethandiisocyanat.
b) Als gegenüber Isocyanaten reaktive Verbindungen (b) können, im Falle der Folie zusätzlich zu den erfindungsgemäßen Polyetherdiolen, die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden. Diese weisen üblicherweise ein zahlenmittleres Molekulargewicht zwischen 500 bis 8000 g/mol, bevorzugt 600 bis 5000 g/mol, insbesondere 800 bis 3000 g/mol auf. Ferner weisen sie üblicherweise eine mittlere Funktionalität von 1,8 bis 2,3, bevorzugt 1,9 bis 2,1, insbesondere 2 auf. Unter mittlerer Funktionalität wird bevorzugt die durchschnittliche Anzahl an OH-Gruppen pro Polyolmolekül verstanden. Falls Polyetheralkohole als (b) eingesetzt werden, so werden diese im allgemeinen nach bekannten Verfahren, beispielsweise durch anionische Polymerisation mit Alkalihydroxiden, als Katalysatoren und unter Zusatz eines Startermoleküls mehrere reaktive Wasserstoffatome gebunden enthält, aus einem oder mehreren Alkylenoxiden, ausgewählt aus Propylenoxid (PO) und Ethylenoxid (EO), hergestellt.
   Als Bestandteil (b) können auch Polyetherole verwendet werden, die durch ring-öffnende Polymerisation von Tetrahydrofuran erhalten werden. Diese Polytetrahydrofurane weisen bevorzugt eine Funktionalität von etwa 2 auf. Ferner weisen sie bevorzugt ein zahlenmittleres Molekulargewicht von 500 bis 4000 g/mol, bevorzugt von 700 bis 3000 g/mol, besonders bevorzugt von 900 bis 2500 g/mol auf. Polytetrahydrofuran (PTHF) ist im Fachgebiet auch unter den Bezeichnungen Tetramethylenglykol (PTMG), Polytetramethylenglykolether (PTMEG) oder Polytetramethylenoxide (PTMO) bekannt.
   Falls Polyesteralkohole als Bestandteil (b) eingesetzt werden, dann werden diese üblicherweise durch Kondensation von mehrfunktionellen Alkoholen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.
   In einer bevorzugten Ausführungsform wird im Bestandteil (b) ein Polyesterol mit einem zahlenmittleren Molekulargewicht von mehr als 400 bis 5000 g/mol, bevorzugt von mehr als 500 bis 3000 g/mol, besonders bevorzugt von 1000 bis 2500 g/mol verwendet.
   Besonders bevorzugte Polyole sind PTHF, sowie Polyesterole auf Basis von Adipinsäure, insbesondere Polyesterole, erhältlich durch Kondensation von Adipinsäure mit 1,4 Butandiol, 1,2 Ethylenglykol, 2-Methylpropan-1,3-diol oder 3-Methyl-1,5-diol oder Mischungen daraus.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-alkylenglykole mit 3 bis 8 Kohlenstoffatomen, bevorzugt entsprechende Oligo- und/oder Polypropylenglykole, wobei auch Mischungen der Kettenverlängerer eingesetzt werden können. Besonders bevorzugt werden Dialkohole als Kettenverlängerungsmittel verwendet, insbesondere wird Butandiol 1,4 eingesetzt.
d) Als geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten Verbindungen. Beispiele hierfür sind tertiäre Amine sowie insbesondere organische Metallverbindungen wie Titansäureester, Eisenverbindungen wie z. B. Eisen-(i)-acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugt werden organische Metallverbindungen eingesetzt, insbesondere Zinndioktoat. Ist das Isocyanat ein aliphatisches Isocynatat, so setzt man das Zinndiokotoat in Konzentrationen von 10 ppm bis 1000 ppm, insbesondere von 100 bis 500 ppm. Ist das Isocyanat ein aromatisches Isocyanat, so setzt man das Zinndioktoat in Konzentrationen von 0,01 bis 100 ppm, bevorzugt 0,1 bis 10 ppm, besonders bevorzugt 0,5 bis 5 ppm ein.
d) Neben Katalysatoren (d) können den Aufbaukomponenten (a) bis (c) auch Hilfsstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatorengemischen weitere Stabilisatoren, z. B. gegen Hydrolyse, Licht, Hitze oder Verfärbung, anorganische und/oder organische Füllstoffe, Verstärkungsmittel und Weichmacher. In einer bevorzugten Ausführungsform fallen unter die Komponente (e) auch Hydrolyseschutzmittel wie beispielsweise polymere und niedermolekulare Carbodiimide.

Neben den genannten Komponenten (a) und (b) und gegebenenfalls (c), (d) und (e) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente (b) eingesetzt werden und fallen definitionsgemäß unter die Komponente (c). Die Umsetzung zum thermoplastischen Polyurethan findet bevorzugt in Abwesenheit von Treibmitteln statt. Bei dem erhaltenen thermoplastischen Polyurethan handelt es sich somit bevorzugt um ein kompaktes, thermoplastisches Polyurethan. Alle in dieser Schrift genannten Molekulargewichte weisen die Einheit [g/mol] auf.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Die Umsetzung kann bei üblichen Kennzahlen erfolgen, beispielsweise von 800 bis 1100. Die Kennzahl ist definiert durch 1000 mal das Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und (c). Bei einer Kennzahl von 1000 kommt auf eine Isocyanatgruppe der Komponente (a) ein aktives Wasserstoffatom, d. h. eine gegenüber Isocyanaten reaktive Funktion, der Komponenten (b) und (c). Bei Kennzahlen über 1000 liegen mehr Isocyanatgruppen als OH-Gruppen vor. Bevorzugt wird eine Kennzahl von 970 bis1050, besonders bevorzugt 980 bis 1020 verwendet. Eine Kennzahl unter 1000 kann vorteilhaft sein, weil dadurch die Molmasse des TPU erniedrigt wird und damit der Schmelzindex in einen für die Verarbeitung bevorzugten Bereich steigt.

Nach dieser allgemeinen Beschreibung von TPU sollen im Nachfolgenden bezüglich der Folie (i) und des Vlieses (ii) deren bevorzugten Ausführungsformen, Ausgangsmaterialien und Herstellverfahren dargestellt werden.

Folie (i) auf der Basis von thermoplastischem Polyurethan

Als Folien auf der Basis von thermoplastischem Polyurethan, in dieser Schrift auch als TPU bezeichnet, werden erfindungsgemäß solche auf der Basis von thermoplastischem Polyurethan basiert auf Polyetherdiolen hergestellt durch Alkoxylierung von difunktionellen Startsubstanzen, wobei als Alkylenoxid Ethylenoxid eingesetzt wird und der Gewichtsanteil an Ethylenoxid bezogen auf das Gesamtgewicht der eingesetzten Alkylenoxide mindestens 20 Gew.-%, bevorzugt mindestens 50 Gew.-%, besonders bevorzugt mindestens 80 Gew.-% beträgt, eingesetzt. Bevorzugt basiert die Folie (i) auf der Umsetzung von (a) Isocyanat mit Polyetherdiol bevorzugt mit einem zahlenmittleren Molekulargewicht zwischen 500 g/mol und 8000 g/mol hergestellt durch Alkoxylierung von difunktionellen Startsubstanzen mit Ethylenoxid und Propylenoxid als Alkylenoxide, besonders bevorzugt hergestellt durch Alkoxylierung von difunktionellen Startsubstanzen mit Ethylenoxid als alleiniges Alkylenoxid. Bevorzugt basiert die Folie (i) auf der Umsetzung von (a) MDI mit (b) Polyetherdiol und (c) Butandiol. Die Dicke der Folie beträgt bevorzugt zwischen 10 µm und 200 µm, besonders bevorzugt zwischen 20 µm und 100 µm, insbesondere zwischen 20 µm und 50 µm. Die Folie (i), d. h. das TPU der Folie (i) weist bevorzugt eine Härte zwischen 60 Shore-A und 74 Shore-D, besonders bevorzugt zwischen 75 Shore-A und 95 Shore-A, insbesondere zwischen 80 Shore-A und 85 Shore-A auf. Bevorzugt wird für die Folie (i) ein wasserdampfdurchlässiges TPU eingesetzt, wobei die Wasserdampfdurchlässigkeit nach DIN 53122-1 bevorzugt größer als 1,5 mg/cm² ist. Die Herstellung entsprechender Folie insbesondere durch bekannte Extrusion von thermoplastischem Polyurethan ist allgemein bekannt und vielfältig beschrieben.

Vlies auf der Basis von thermoplastischem Polyurethan

Unter Vlies, in dieser Schrift auch als Vliesstoff oder Nonwoven bezeichnet, wird eine Schicht, ein Vlies und/oder ein Faserflor aus gerichtet angeordneten oder wahllos zueinander befindlichen Fasern, verfestigt durch Reibung und/oder Kohäsion und/oder Adhäsion verstanden.

Bevorzugt werden Papier oder Erzeugnisse, die gewebt, gestrickt, getuftet, unter Einbindung von Bindegarnen oder Filamenten nähgewirkt oder durch ein Nasswalken gefilzt worden sind, nicht als Vliesstoffe im Sinne dieser Anmeldung behandelt.

In einer bevorzugten Ausführungsform ist ein Material dann als "Vliesstoff" im Sinne dieser Anmeldung zu sehen, wenn mehr als 50 Gew.-%, besonders bevorzugt zwischen 60 Gew.-% und 90 Gew.-% des Gesamtgewichts der Faserbestandteile des Vlies aus Fasern bestehen, deren Verhältnis von Länge zu Durchmesser größer als 300, besonders bevorzugt größer als 500 ist.

In einer bevorzugten Ausführungsform haben die einzelnen Fasern des Nonwovens einen Durchmesser von 100 µm bis 0,1 µm, bevorzugt von 50 µm bis 0,5 µm, insbesondere von 10 µm bis 0,5 µm.

In einer bevorzugten Ausführungsform weisen die Vliesstoffe eine Dicke von 0,01 bis 5 Millimeter (mm), mehr bevorzugt von 0,1 bis 2 mm, besonders bevorzugt von 0,15 bis 1,5 mm, gemessen nach ISO 9073-2 auf.

In einer bevorzugten Ausführungsform weisen die Vliesstoffe eine Flächenmasse zwischen 10 und 1000 g/m², besonders bevorzugt zwischen 20 und 500 g/m², insbesondere bevorzugt zwischen 30 und 100 g/m² auf, gemessen nach ISO 9073-1 auf.

Der Vliesstoff kann zusätzlich mechanisch verfestigt sein. Bei der mechanischen Verfestigung kann es sich um eine einseitige oder beidseitige mechanische Verfestigung handeln, bevorzugt liegt eine zweiseitige mechanische Verfestigung vor. Der Vliesstoff kann zusätzlich chemisch verfestigt sein. Bei der chemischen Verfestigung wird der Vliesstoff durch Zugabe eines chemischen Hilfsstoffes, z. B. eines Adhesivs, verfestigt. Neben der vorstehend beschriebenen mechanischen und chemischen Verfestigung kann der Vliesstoff zusätzlich noch thermisch verfestigt sein. Eine thermische Verfestigung kann beispielsweise durch eine Heißluftbehandlung des Vliesstoffes erfolgen. Wird der Vliesstoff verfestigt, wird er bevorzugt thermisch verfestigt.

Nachstehend werden 4 Parameter (P1 bis P4) beschrieben, die der verwendete Vliesstoff (ii) in bevorzugten Ausführungsformen aufweisen kann.
P1) In einer Ausführungsform weist der verwendete Vliesstoff eine Zugfestigkeit in Produktionsrichtung von 5 Newton (N) pro 5 cm bis 1000 N pro 5 cm, bevorzugt von 40 N pro 5 cm bis 1000 N pro 5 cm auf (gemessen nach DIN EN 12127).
P2) In einer Ausführungsform weist der verwendete Vliesstoff eine Zugfestigkeit senkrecht zur Produktionsrichtung von 5 Newton (N) pro 5 cm bis 1000 N pro 5 cm, bevorzugt von 20 N pro 5 cm bis 1000 N pro 5 cm, insbesondere zwischen 40 und 1000 N pro 5 cm auf (gemessen nach DIN EN 12127).
P3) In einer Ausführungsform weist der verwendete Vliesstoff eine Dehnung in Produktionsrichtung von 10 % bis 800 %, bevorzugt von 50 % bis 800 % insbesondere von 250 % bis 800 % gemessen nach DIN EN 29073 T3 auf.
P4) In einer Ausführungsform weist der verwendete Vliesstoff eine Dehnung gegen Produktionsrichtung von 10 % bis 800 %, bevorzugt von 50 % bis 800 % insbesondere von 250 % bis 800 % gemessen nach DIN EN 29073 T3 auf.

In einer bevorzugten Ausführungsform weist der Vliesstoff mindestens zwei, mehr bevorzugt mindestens drei und insbesondere alle der Merkmale P1 bis P4 auf.

Der verwendete Vliesstoff ist aus thermoplastischem Polyurethan. Darunter ist zu verstehen, dass der verwendete Vliesstoff thermoplastisches Polyurethan enthält, bevorzugt als wesentlichen Bestandteil enthält. In einer bevorzugten Ausführungsform enthält der verwendete Vliesstoff thermoplastisches Polyurethan in einer Menge von 60 Gew.-% bis 100 Gew.-%, besonders bevorzugt von mehr als 80 Gew.-%, insbesondere mehr als 95 Gew.-%, bezogen auf das Gesamtgewicht des Vliesstoffes.

Neben thermoplastischem Polyurethan kann der verwendete Vliesstoff noch andere Polymere oder Hilfsstoffe, wie beispielsweise Polyproplyene oder Copolymere des Polypropylens, Polyethylene oder Copolymere des Polyethylens und/oder Polystyrol und/oder Copolymere des Polystrols wie Styrolacrylnitrilcopolymere enthalten.

In einer bevorzugten Ausführungsform weist das thermoplastische Polyurethan, das zur Herstellung des Vliesstoffes eingesetzt wird, eine Shorehärte zwischen 50 Shore-A und 54 Shore-D, besonders bevorzugt zwischen 70 Shore-A und 90 Shore-A, gemessen nach DIN 53505 auf.

Bei vielen Anwendungen ist die Lichtechtheit der Nonwovens von Bedeutung. Auch wenn das Vlies nur als Träger dient, kann es sein, dass die Zurichtung nicht dick genug ist, um alles UV-Licht abzufiltern. Daher sind aliphatische Nonwoven, d. h. solche, die auf aliphatischen Isocyanaten basieren, in solchen Fällen bevorzugt.

Die thermoplastische Polyurethane enthaltenden Vliesstoffe können üblicherweise durch das aus dem Stand der Technik bekannte "Meltblown-Verfahren" oder "Spunbond-Verfahren" aus vorstehend beschriebenen thermoplastischem Polyurethan hergestellt werden. "Meltblown-Verfahren" und "Spunbond-Verfahren" sind im Fachgebiet bekannt. Die dabei entstehenden Vliesstoffe unterscheiden sich im allgemeinen in ihren mechanischen Eigenschaften und ihrer Konsistenz. So sind nach dem Spunbond-Verfahren hergestellte Vliesstoffe besonders stabil sowohl in horizontaler als auch in vertikaler Richtung, besitzen aber eine offenporige Struktur. Nach dem Meltblown-Verfahren hergestellte Vliesstoffe haben ein besonders dichtes Netzwerk an Fasern und bilden damit eine sehr gute Barriere für Flüssigkeiten.

Es können auch Vliesstoffe durch Kombination des Meltblown-Verfahrens und des Spunbond-Verfahrens hergestellt werden. Diese Vliesstoffe weisen ein besonders dichtes Netzwerk an Fasern und eine sehr gute Barriere für Flüssigkeiten auf und besitzen sehr gute mechanische Eigenschaften. Bevorzugt werden Vliesstoffe durch Kombination des Meltblown- und Spunbond-Verfahrens hergestellt.

Besonders bevorzugt für das erfindungsgemäße Laminat ist ein Vlies (ii), das nach dem Meltblown-Verfahren hergestellt ist.

Zur Herstellung eines Vliesstoffs aus thermoplastischem Polyurethan (engl. TPU-Nonwoven) nach dem Meltblown-Verfahren kann eine kommerzielle Anlage zur Herstellung von Meltblown-Vliesstoffen verwendet werden. Solche Anlagen werden beispielweise von der Fa. Reifenhäuser, Germany, vertrieben.

Schematisch wird üblicherweise bei dem Meltblown-Verfahren das TPU in einem Extruder aufgeschmolzen und mittels üblicher Hilfsmittel wie Schmelzepumpen und Filter zu einem Spinnbalken geführt. Hier fließt das Polymer im allgemeinen durch Düsen und wird am Düsenausgang durch einen Luftstrom zu einem Faden verstreckt. Die verstreckten Fäden werden üblicherweise auf einer Trommel oder einem Band abgelegt und weitertransportiert.

In einer bevorzugten Ausführungsform wird als Extruder ein Einwellenextruder mit einem Kompressionsverhältnis zwischen 1 : 2 und 1 : 3, besonders bevorzugt zwischen 1 : 2 und 1 : 2,5 verwendet. Bevorzugt wird zudem eine Dreizonenschnecke mit einem L/D Verhältnis (Länge zu Durchmesser) zwischen 25 und 30 verwendet. Bevorzugt sind die drei Zonen dabei gleich lang. Bevorzugt hat die Dreizonenschnecke eine durchgehend konstante Gangsteigung zwischen 0,8 und 1,2 D, insbesondere bevorzugt zwischen 0,95 und 1,05 D. Das Spiel zwischen Schnecke und Zylinder ist > 0,1 mm, bevorzugt zwischen 0,1 und 0,2 mm. Wird als Extruderschnecke eine Barriereschnecke verwendet, so wird bevorzugt ein Überströmspalt > 1,2 mm verwendet. Besitzt die Schnecke Mischteile, so sind diese Mischteile bevorzugt keine Scherteile. Die Nonwovenanlage wird üblicherweise so dimensioniert, dass die Verweilzeit des TPU möglichst kurz ist, d. h. < 15 min, bevorzugt < 10 min, insbesondere bevorzugt < 5 min.

Üblicherweise wird TPU je nach Härte zwischen 180 °C und 220 °C verarbeitet. Überraschenderweise hat sich jetzt aber gezeigt, dass TPU-Nonwoven sich besonders gut herstellen lassen, wenn die Verarbeitungstemperaturen größer als die üblichen empfohlenen Verarbeitungstemperaturen sind. Bevorzugt erfolgt die Verarbeitung des thermoplastischen Polyurethans zum Vlies (ii) bei folgenden Temperaturen:

Für TPU mit einer Shorehärte zwischen 75 A und 85 A:
Die Temperatur des Adapters beträgt bevorzugt zwischen 180 °C und 240 °C, besonders bevorzugt zwischen 200 °C bis 240 °C.
Die Temperatur des Kopfes beträgt bevorzugt zwischen 180 °C und 240 °C, besonders bevorzugt zwischen 200 °C bis 240 °C.
Die Temperatur der Düse beträgt bevorzugt zwischen 180 °C bis 240 °C, besonders bevorzugt zwischen 200 °C bis 240 °C.

Für TPU mit einer Shorehärte zwischen 90 A und 98 A:
Die Temperatur des Adapters beträgt bevorzugt zwischen 200 °C und 260 °C, besonders bevorzugt zwischen 220 °C und 250 °C.
Die Temperatur des Kopfes beträgt bevorzugt zwischen 200 °C und 260 °C, besonders bevorzugt zwischen 220 °C und 250 °C.
Die Temperatur der Düse beträgt bevorzugt zwischen 200 °C und 260 °C, besonders bevorzugt zwischen 220 °C und 250 °C.

Üblicherweise besitzen die Kapillaren im Spinnbalken einen Durchmesser zwischen 0,3 mm und 0,6 mm. Bei der Herstellung der Fasern können diese mit Sekundärluft gekühlt werden. Eine Kühlung mit Sekundärluft ist aber nicht bevorzugt.

Besonders bevorzugt ist ein Laminat, bei dem das thermoplastische Polyurethan der Folie (i) und des Vlieses (ii) auf den gleichen Isocyanaten (a), Diolen (b) mit einem zahlenmittleren Molekulargewicht zwischen 500 und 10000 g/mol und Kettenverlängerern (c) basiert.

Die Herstellung des Laminates kann durch Direktextrusion einer Folie (i) auf das TPU-Vlies (ii) erfolgen. Dabei wird das Vlies bevorzugt mittels einer Breitschlitzdüse mit TPU-Schmelze direkt beschichtet. Die Breitschlitzdüse wird bevorzugt beschickt durch einen Extruder. Die hierfür verwendeten TPU weisen bevorzugt einen MFR (190 °C / 21,6 kg) zwischen 20 und 100 g/10 min, bevorzugt zwischen 40 und 80 g/10 min auf. Nach Ablegen der Schmelze auf dem Fließ läuft das Material bevorzugt durch ein Walzenpaar (Kalander), welches die Verbindung zusätzlich verpresst. Die Walzen können wahlweise strukturiert oder glatt sein und gegebenenfalls eine Antihaftbeschichtung aufweisen.

Bevorzugt ist aber die Herstellung einer TPU-Folie (i) und die anschließende Laminierung der TPU-Folie (i) auf das TPU-Vlies (ii). Hierzu werden das Vlies (ii) und die Folie (i) bevorzugt übereinandergelegt und mittels Druck und Wärme miteinander verpresst. Hierbei ist es bevorzugt, die beiden Parameter Druck und Wärme so zu wählen, dass die Folie nicht zerstört wird und somit Undichtigkeiten vermieden werden. Gleichzeitig wird aber ein guter Verbund zwischen Folie (i) und Vlies (ii) angestrebt.

Gegenstand der vorliegenden Erfindung ist somit auch das Verfahren zur Herstellung von Laminaten enthaltend haftend verbunden Folie (i) auf der Basis von thermoplastischem Polyurethan basierend auf Polyetherdiol hergestellt durch Alkoxylierung von difunktionellen Startsubstanzen, wobei als Alkylenoxid Ethylenoxid eingesetzt wird und der Gewichtsanteil an Ethylenoxid bezogen auf das Gesamtgewicht der eingesetzten Alkylenoxide mindestens 20 Gew.-% beträgt sowie Vlies (ii) auf der Basis von thermoplastischem Polyurethan, wobei man die Folie auf Basis von thermoplastischem Polyurethan und das Vlies (ii) auf der Basis von thermoplastischem Polyurethan bei einer Temperatur zwischen 60 °C und 140 °C, bevorzugt zwischen 70 °C und 120 °C, besonders bevorzugt zwischen 80 °C und 110 °C miteinander verpresst.

Die Linienkraft beim Verpressen beträgt bevorzugt zwischen 1 N/mm und 300 N/mm, besonders bevorzugt zwischen 5 N/mm und 100 N/mm, insbesondere zwischen 10 N/mm und 60 N/mm.

Bevorzugt wird man die Herstellung des erfindungsgemäßen Laminates mittels Inline-Laminierung des Vlies mit der Folie vornehmen. In dieser bevorzugten Ausführungsform wird man das Vlies (ii), d. h. das Nonwoven auf einem Siebband fertigen und anschließend direkt durch einen Kalander fahren, in den man die Folie (i) hineinführt. Dadurch wird das Umwickeln des TPU Nonwovens gespart. Zudem ist die Haftung der Folie auf dem frisch hergestellten Nonwoven besser als auf einem längere Zeit gelagerten Nonwoven. Bevorzugt wird man somit das Vlies nach dem Meltblown-Verfahren herstellen und anschließend, bevorzugt in direktem Anschluss an die Herstellung des Vlieses, mit der Folie verpressen. Es können auch Kalander mit Gravur verwendet werden. Bevorzugt werden solche Kalander verwendet, bei denen die Auflagefläche zwischen 10 und 100 % beträgt, bevorzugt zwischen 30 und 70 %, insbesondere zwischen 30 und 50 %.

Das Laminat besitzt üblicherweise eine Reißdehnung von mindestens 100 %, bevorzugt größer als 150 %, insbesondere bevorzugt größer als 200 %. Die Zugfestigkeit des Laminates beträgt bevorzugt mindestens 5 N/ 5 cm, besonders bevorzugt zwischen 5 N/ 5 cm und 10000 N/5 cm, insbesondere zwischen 10 N/5 cm und 2000 N/ 5 cm, insbesondere bevorzugt zwischen 20 N/5 cm und 2000 N/5 cm.

## Patentansprüche

1. Laminat, **dadurch gekennzeichnet, dass** das Laminat haftend verbunden enthält
(i) Folie auf der Basis von thermoplastischem Polyurethan basierend auf Polyetherdiol hergestellt durch Alkoxylierung von difunktionellen Startsubstanzen, wobei als Alkylenoxid Ethylenoxid eingesetzt wird und der Gewichtsanteil an Ethylenoxid bezogen auf das Gesamtgewicht der eingesetzten Alkylenoxide mindestens 20 Gew.-% beträgt sowie
(ii) Vlies auf der Basis von thermoplastischem Polyurethan.

2. Laminat nach Anspruch 1, **dadurch gekennzeichnet, dass** die Folie (i) basiert auf der Umsetzung von (a) Isocyanat mit Polyetherdiol hergestellt durch Alkoxylierung von difunktionellen Startsubstanzen mit Ethylenoxid und Propylenoxid als Alkylen-oxide.

3. Laminat nach Anspruch 1, **dadurch gekennzeichnet, dass** die Folie (i) basiert auf der Umsetzung von (a) Isocyanat mit Polyetherdiol hergestellt durch Alkoxylierung von difunktionellen Startsubstanzen mit Ethylenoxid als alleiniges Alkylenoxid.

4. Laminat nach Anspruch 1, **dadurch gekennzeichnet, dass** die Folie (i) basiert auf der Umsetzung von (a) 4,4'-Diphenylmethandiisocyanat mit (b) Polyetherdiol und (c) Butandiol.

5. Laminat nach Anspruch 1, **dadurch gekennzeichnet, dass** die Folie (i) eine Dicke zwischen 10 µm und 200 µm aufweist.

6. Laminat nach Anspruch 1, **dadurch gekennzeichnet, dass** die Folie (i) eine Härte zwischen 60 Shore-A und 74 Shore-D aufweist.

7. Laminat nach Anspruch 1, **dadurch gekennzeichnet, dass** die Folie (i) auf der Basis von thermoplastischem Polyurethan wasserdampfdurchlässig ist.

8. Laminat nach Anspruch 1, **dadurch gekennzeichnet, dass** mehr als 50 Gew.-% des Gesamtgewichts der Faserbestandteile des Vlies aus Fasern bestehen, deren Verhältnis von Länge zu Durchmesser größer als 300 ist.

9. Laminat nach Anspruch 1, **dadurch gekennzeichnet, dass** die Fasern des Vlies einen Durchmesser zwischen 100 µm und 0,1 µm aufweisen.

10. Laminat nach Anspruch 1, **dadurch gekennzeichnet, dass** das Vlies (ii) eine Dicke zwischen 0,01 mm und 5 mm, gemessen nach ISO 9073-2 aufweist.

11. Laminat nach Anspruch 1, **dadurch gekennzeichnet, dass** das Vlies (ii) eine Flächemasse zwischen 10 g/m² und 1000 g/m², gemessen nach ISO 9073-1 aufweist.

12. Laminat nach Anspruch 1, **dadurch gekennzeichnet, dass** das thermoplastische Polyurethan, auf dem das Vlies (ii) basiert, eine Härte zwischen 50 Shore-A und 54 Shore-D aufweist.

13. Laminat nach Anspruch 1, **dadurch gekennzeichnet, dass** das thermoplastische Polyurethan der Folie (i) und des Vlies (ii) auf den gleichen Isocyanaten (a), Diolen (b) mit einem zahlenmittleren Molekulargewicht zwischen 500 und 10000 g/mol und Kettenverlängerern (c) basiert.

14. Bekleidungsstücke enthaltend Laminat gemäß einem der Ansprüche 1 bis 13.

15. Schuhe enthaltend Laminat gemäß einem der Ansprüche 1 bis 13.

16. Medizinische Artikel enthaltend Laminat gemäß einem der Ansprüche 1 bis 13.

17. Verfahren zur Herstellung von Laminat enthaltend haftend verbunden
(i) Folie auf der Basis von thermoplastischem Polyurethan basierend auf Polyetherdiol hergestellt durch Alkoxylierung von difunktionellen Startsubstanzen, wobei als Alkylenoxid Ethylenoxid eingesetzt wird und der Gewichtsanteil an Ethylenoxid bezogen auf das Gesamtgewicht der eingesetzten Alkylenoxide mindestens 20 Gew.-% beträgt sowie
(ii) Vlies auf der Basis von thermoplastischem Polyurethan Verbundmaterial,
**dadurch gekennzeichnet, dass** man die Folie auf Basis von thermoplastischem Polyurethan und das Vlies (ii) auf der Basis von thermoplastischem Polyurethan bei einer Temperatur zwischen 60 °C und 140 °C miteinander verpresst.

18. Verfahren nach Anspruch 17, **dadurch gekennzeichnet, dass** die Linienkraft beim Verpressen zwischen 1 N/mm und 300 N/mm beträgt.

19. Verfahren nach Anspruch 17, **dadurch gekennzeichnet, dass** man die Herstellung mittels Inline-Laminierung des Vlies mit der Folie vornimmt.

20. Verfahren nach Anspruch 17, **dadurch gekennzeichnet, dass** man das Vlies nach dem Meltblown-Vertahren herstellt und anschließend bevorzugt in direktem Anschluss mit der Folie verpresst.

21. Verfahren nach Anspruch 17, **dadurch gekennzeichnet, dass** man ein Laminat gemäß einem der Ansprüche 1 bis 13 herstellt.

## Claims

1. A laminate comprising bonded together adheringly
(i) film based on a thermoplastic polyurethane based on a polyetherdiol prepared by alkoxylation of a difunctional starting substance, ethylene oxide being used as alkylene oxide and the weight fraction of ethylene oxide based on the total weight of the alkylene oxides used being at least 20% by weight, and also
(ii) fibrous nonwoven web based on thermoplastic polyurethane.

2. The laminate according to claim 1 wherein said film (i) is based on the reaction of (a) an isocyanate with a polyetherdiol prepared by alkoxylation of a difunctional starting substance with ethylene oxide and propylene oxide as alkylene oxides.

3. The laminate according to claim 1 wherein said film (i) is based on the reaction of (a) an isocyanate with a polyetherdiol prepared by alkoxylation of difunctional starting substances with ethylene oxide as sole alkylene oxide.

4. The laminate according to claim 1 wherein said film (i) is based on the reaction of (a) 4,4'-diphenylmethane diisocyanate with (b) polyetherdiol and (c) butanediol.

5. The laminate according to claim 1 wherein said film (i) is between 10 µm and 200 µm thick.

6. The laminate according to claim 1 wherein said film (i) has a hardness between 60 Shore A and 74 Shore D.

7. The laminate according to claim 1 wherein said film (i) based on thermoplastic polyurethane is water vapor permeable.

8. The laminate according to claim 1 wherein more than 50% by weight of the total weight of the fibrous constituents of the fibrous nonwoven web consists of fibers having a length to diameter ratio of greater than 300.

9. The laminate according to claim 1 wherein the fibers of the fibrous nonwoven web are between 100 µm and 0.1 µm in diameter.

10. The laminate according to claim 1 wherein said fibrous nonwoven web (ii) has a thickness between 0.01 mm and 5 mm, measured to ISO 9073-2.

11. The laminate according to claim 1 wherein said fibrous nonwoven web (ii) has a mass per unit area between 10 g/m² and 1000 g/m², measured to ISO 9073-1.

12. The laminate according to claim 1 wherein the thermoplastic polyurethane on which said fibrous nonwoven web (ii) is based has a hardness between 50 Shore A and 54 Shore D.

13. The laminate according to claim 1 wherein the thermoplastic polyurethane of said film (i) and of said fibrous nonwoven web (ii) is based on the same isocyanates (a), diols (b) having a number average molecular weight between 500 and 10 000 g/mol and chain extenders (c).

14. A garment comprising a laminate according to any one of the claims 1 to 13.

15. Footwear comprising a laminate according to any one of the claims 1 to 13.

16. A medical/medicinal article comprising a laminate according to any one of the claims 1 to 13.

17. A process for producing a laminate comprising bonded together adheringly
(i) film based on a thermoplastic polyurethane based on a polyetherdiol prepared by alkoxylation of a difunctional starting substance, ethylene oxide being used as alkylene oxide and the weight fraction of ethylene oxide based on the total weight of the alkylene oxides used being at least 20% by weight, and also
(ii) fibrous nonwoven web based on thermoplastic polyurethane composite material,
which comprises pressing said film based on thermoplastic polyurethane and said fibrous nonwoven web (ii) based on thermoplastic polyurethane together at a temperature between 60°C and 140°C.

18. The process according to claim 17 wherein the lineal pressing force is between 1 N/mm and 300 N/mm.

19. The process according to claim 17 wherein the laminate is produced by in-line lamination of said fibrous nonwoven web with said film.

20. The process according to claim 17 wherein said fibrous nonwoven web is produced by the meltblown process and is then preferably directly pressed together with said film.

21. The process according to claim 17 for producing a laminate according to any one of the claims 1 to 13.

## Revendications

1. Laminé, **caractérisé en ce que** le laminé continent, de manière assemblée par adhérence
(i) une feuille à base de polyuréthanne thermoplastique à base de polyétherdiol préparé par alcoxylation de substances de départ difonctionnelles, où on utilise comme oxyde d'alkylène de l'oxyde d'éthylène et la proportion pondérale d'oxyde d'éthylène par rapport au poids total des oxydes d'alkylène utilisés est d'au moins 20% en poids ainsi que
(ii) un non-tissé à base de polyuréthane thermoplastique.

2. Laminé selon la revendication 1, **caractérisé en ce que** la feuille (i) est basée sur la transformation de (a) isocyanate avec du polyétherdiol préparé par alcoylation de substances de départ difonctionnelles avec de l'oxyde d'éthylène et de l'oxyde de propylène comme oxydes d'alkylène.

3. Laminé selon la revendication 1, **caractérisé en ce que** 1a feuille (i) est basée sur la transformation de (a) isocyanate avec du polyétherdiol préparé par alcoxylation de substances de départ difonctionnelles avec de l'oxyde d'éthylène comme oxyde d'alkylène unique.

4. Laminé selon la revendication 1, **caractérisé en ce que** la feuille (i) est basée sur la transformation de (a) 4,4'-diphénylméthanediisocyanate avec (b) du polyétherdiol et (c) du butanediol.

5. Laminé selon la revendication 1, **caractérisé en ce que** la feuille (i) présente une épaisseur entre 10 µm et 200 µm.

6. Laminé selon la revendication 1, **caractérisé en ce que** la feuille (i) présente une dureté entre 60 Shore-A et 74 Shore-D.

7. Laminé selon la revendication 1, **caractérisé en ce que** la feuille (i) à base de polyuréthane thermoplastique est perméable à la vapeur d'eau.

8. Laminé selon la revendication 1, **caractérisé en ce que** plus de 50% en poids du poids total des constituants fibreux du non-tissé sont constitués par des fibres dont le rapport longueur à diamètre est supérieur à 300.

9. Laminé selon la revendication 1, **caractérisé en ce que** les fibres du non-tissé présentent un diamètre entre 100 µm et 0,1 µm.

10. Laminé selon la revendication 1, **caractérisé en ce que** le non-tissé (ii) présente une épaisseur entre 0,01 mm et 5 µm, mesurée selon la norme ISO 9073-2.

11. Laminé selon la revendication 1, **caractérisé en ce que** le non-tissé (ii) présente une masse surfacique entre 10 g/m² et 1000 g/m², mesurée selon la norme ISO 9073-1.

12. Laminé selon la revendication 1, **caractérisé en ce que** le polyuréthane thermoplastique, à la base du non-tissé (ii), présente une dureté entre 50 Shore-A et 54 Shore-D.

13. Laminé selon la revendication 1, **caractérisé en ce que** le polyuréthane thermoplastique de 1a feuille (i) et du non-tissé (ii) est basé sur les mêmes isocyanates (a), diols (b) présentant un poids moléculaire numérique moyen entre 500 et 10 000 g/mole et agents d'allongement de chaîne (c).

14. Vêtements contenant le laminé selon l'une quelconque des revendications 1 à 13.

15. Chaussures contenant le laminé selon l'une quelconque des revendications 1 à 13.

16. Objets médicaux contenant le laminé selon l'une quelconque des revendications 1 à 13.

17. Procédé pour 1a préparation d'un matériau composite de type laminé contenant, de manière assemblée par adhérence
(i) une feuille à base de polyuréthane thermoplastique à base de polyétherdiol préparé par alcoxylation de substances de départ difonctionnelles, où on utilise comme oxyde d'alkylène de l'oxyde d'éthylène et la proportion pondérale d'oxyde d'éthylène par rapport au poids total des oxydes d'alkylène utilisés est d'au moins 20% en poids ainsi que
(ii) un non-tissé à base de polyuréthane thermoplastique,
**caractérisé en ce qu'**on presse l'un avec l'autre la feuille à base de polyuréthane thermoplastique et le non-tissé (ii) à base de polyuréthane thermoplastique à une température entre 60°C et 140°C.

18. Procédé selon la revendication 17, **caractérisé en ce que** la force linéaire lors du pressage est située entre 1 N/mm et 300 N/mm.

19. Procédé selon la revendication 17, **caractérisé en ce qu'**on réalise la production au moyen d'un laminage en ligne du non-tissé avec la feuille.

20. Procédé selon 1a revendication 17, **caractérisé en ce qu'**on produit le non-tissé selon le procédé de soufflage en masse fondue, puis on le presse de manière immédiatement consécutive avec la feuille.

21. Procédé selon la revendication 17, **caractérisé en ce qu'**on produit un laminé selon l'une quelconque des revendications 1 à 13.
